# EUROPEAN PATENT APPLICATION

(11) **EP 4 817 453 A2**
(43) Date of publication of application: **07.10.2026**
(21) Application number: 26157742.3
(22) Date of filing: 11.02.2026
(51) Int. Cl.: A43B 1/14, A43B 23/02, B29D 35/12, B29D 35/14

(54) **LIQUID TPU TEXTURING DURING AND AFTER CURING**

(30) Priority: 13.02.2025 DE 102025105382
(71) Applicant: adidas AG, 91074 Herzogenaurach (DE)
(72) Inventor: HANSON, Henry Niles, 91074 Herzogenaurach (DE)
(74) Representative: Bardehle Pagenberg Partnerschaft mbB Patentanwälte Rechtsanwälte

(57) **Abstract**

The present invention relates to a method (100) for manufacturing a sole structure (240), preferably for a sports shoe (260), comprising the steps of: (a.) providing (110) a liquified polymer (230) and/or a polymer layer or parts thereof (233); (b.) arranging (120) the liquified polymer and/or the polymer layer or parts thereof onto a base layer (250); and (c.)curing (130) the liquified polymer; wherein the method comprises a first group of steps and/or a second group of steps, wherein the first group of steps comprises: (d.) partially curing (140) the liquified polymer (230) obtained in step b; and (e.) texturing (150) the partially cured polymer (231) before step c; wherein the second group of steps comprises: (f.) disposing (160) the cured polymer (232) obtained in step c and/or the polymer layer or parts thereof (233) obtained in step b in a mold structure (300) comprising a textured sole imprint (340); (g.) heating (170) the mold structure (300), preferably by applying steam into the mold structure (300), while pressing the cured polymer (232) and/or the polymer layer or parts thereof (233) against the textured sole imprint (340); (h.) heating (180) the cured polymer (232) and/or the polymer layer or parts thereof (233) in order to melt at least partially the cured polymer and/or the polymer layer or parts thereof (233), and to substantially mold the textured sole imprint (340) on the outer surface of the cured polymer (232) and/or the polymer layer or parts thereof (233); (i.) thereby obtaining (190) the sole structure (240). The invention also relates to a sole structure and an outsole sole manufactured according to the method and a sports shoe.

## Description

### FIELD OF THE INVENTION

The present invention relates to a method for manufacturing a sole structure, preferably for a sports shoe, a sole structure and an outsole sole manufactured according to the method and a sports shoe.

### BACKGROUND

Different types of sport require specific types of sole structure to ensure stability. In particular, sole structures on outsoles in sports shoes, such as lugs, cleats, or patterned treads, provide various performance advantages depending on the sport. These structures enhance traction, grip, design, stability and the athlete's perception reducing the risk of slipping and improving movement efficiency.

The manufacture of sole structures on outsoles in sports shoes in the art involves injection molding, which is widely used for sports shoes requiring lightweight and flexible outsoles. In this process, thermoplastic materials such as EVA (ethylene vinyl acetate), TPU (thermoplastic polyurethane), or rubber compounds are melted and injected under high pressure into a steel mold that defines the sole's shape and tread pattern. One of the main drawbacks are the cost-expensive production of molds that are made of steel and require precision engineering, making them expensive to produce, especially for small production runs or frequent design changes. Additionally, injection molding can be limited in material options, as not all rubber compounds are suitable for this process.

A different approach comprises the addition of engravings to the final sole, i.e. using laser engraving. In particular, after the outsole is manufactured, a laser engraving machine burns the desired structure into the surface. The disadvantage of this method is that the addition of the texture only takes place after the sole has been crafted, leading to an inflexible process step.

Other techniques such as embossing and debossing, surface roughening, cutting and grooving can only be performed after the outsole has been manufactured. Accordingly, these techniques are commonly used as one of the last steps in the manufacture of sole structures.

However, a common disadvantage of these soles is that conventional soles are heavy and thick, both impacting on the athlete's performance and thus making them undesirable. A further disadvantage is that the process of producing the sole structure cannot be flexibly changed or implemented during the overall manufacture process and its application is rather rigid. Furthermore, another disadvantage is the inflexible design of the structure, which once prepared cannot be easily changed or adapted to specific needs of the sole or athlete.

Further prior art is known from WO 2025/045 687 A1.

### SUMMARY OF THE INVENTION

Therefore, the object of the present invention is to provide an improved method, sole structure and outsole, as well as a sports shoe comprising the sole structure in order to at least partly overcome the above-mentioned deficiencies of the prior art.

The above-outlined problems are addressed by the aspects of the present invention.

In a first aspect, present invention is directed to method for manufacturing a sole structure, preferably for a sports shoe, comprising the steps of:
a. providing a liquified polymer and/or a polymer layer or parts thereof;
b. arranging the liquified polymer and/or a polymer layer or parts thereof onto a base layer; and
c. curing the liquified polymer;

wherein the method comprises a first group of steps and/or a second group of steps, wherein the first group of steps comprises:
   d. partially curing the liquified polymer obtained in step b; and
   e. texturing the partially cured polymer before step c;
wherein the second group of steps comprises:
   f. disposing the cured polymer obtained in step c and/or the polymer layer or parts thereof obtained in step b in a mold structure comprising a textured sole imprint;
   g. heating the mold structure, preferably by applying steam into the mold structure, while pressing the cured polymer and/or the polymer layer or parts thereof against the textured sole imprint;
   h. heating the cured polymer and/or the polymer layer or parts thereof in order to melt at least partially the cured polymer and/or the polymer layer or parts thereof, and to substantially mold the textured sole imprint on the outer surface of the cured polymer and/or the polymer layer or parts thereof;
   i. thereby obtaining the sole structure.

The method of the present invention has shown to provide a more flexible process for producing sole structures. A conventional sole structure, for example a structured outsole for a sports shoe usually is manufactured by e.g. injection molding. The method according to the invention is based on a different approach, namely, the provision of a liquified and/or of a polymer layer or parts thereof which are arranged on the base layer. The method of the present invention is more efficient compared to methods known in the prior art, as the present method integrates the step of texturing into the production process. Furthermore, texturing during or post curing offers flexibility for customization of the sole structure and the overall process. This dual capability is valuable for improving the sole structure and its method for manufacturing.

The present method for manufacturing a sole structure eliminates the need for additional surface treatments which reduces cycle time and increases throughput. Furthermore, the combination of curing and texturing in a single step avoids the cost of post-processing equipment like lasers or chemical etching systems and reduces labor costs. Moreover, texturing during curing and post-curing results in fewer processing steps, which leads in lower energy consumption for heating, handling, or operating additional machinery. The method of the present invention further allows for individual changes or customization during the process, like unique branding, part identification, or product differentiation without the necessity to alter the process or mold. In this manner, process cost and time of creating new molds or dies when a different texture is required is avoided, leading to a more cost-efficient method.

Furthermore, when using the method of the present invention, a more scalable process is provided. When increasing the production volume, the method of the present invention remains efficient as particularly, texturing during curing can be incorporated as an automated process, which leads to high repeatability and high throughput.

Moreover, when using the method of the present invention e.g. glue- and injection molding-based deposition is avoided while providing a sole structure with enhanced traction and friction performance.

Accordingly, the method of the present invention improves speed, cost, flexibility automation (i.e. an automated, scalable approach), material efficiency, risk management (as a back-up option for process flexibility) and customization of the overall process for manufacturing a sole structure.

While the sole structure can be specifically used to create a lighter and thinner e.g. outsole, the sole structure can be further used to enhance the grip of the sports shoe for particular workouts, e.g. when arranging the liquified polymer and/or the polymer layer or parts thereof in particular zones of the sports shoe.

In this manner, the sole structure is manufactured more efficiently while the liquified polymer can be arranged more precisely and effectively. By doing so, no material waste is produced e.g. by cutting excess material. In this manner, the method according to present invention provides for an improved method for producing the inventive sole structure for e.g., a sports shoe, by only consuming as much material as needed and avoiding any waste production.

The method of the present invention has shown to provide a sole structure which enhances traction on smooth and wet surfaces while reducing the probability of slipping. When using the sole structure according to the invention, the running performance of the wearer, e.g. an athlete is substantially improved. Due to the reduced risk of slipping, e.g. on wet and smooth surfaces, the sole structure provides for an improved overall workout experience and result. In particular, and when comparing to conventional sole structures, the sole structure of the present invention exhibits a drastic improvement in friction. Moreover, the sole structure has the advantage that it can be individually designed based on the friction force, which acts on the sole structure. Furthermore, the sole structure is considerably lighter and thinner, due to the inventive materials and manufacturing method, making the overall sole structure more desirable. The sole structure can further be individually designed based on the force magnitude and/or force direction at different parts of e.g. the shoe. The sole structure can be optimized in this manner for different sports and different athletes.

A *"sole structure"* according to present disclosure is but not limited to any part of a shoe or footwear that provides structure, texture and/or traction for the wearer. The method may be used for manufacturing e.g. the sidewall of a midsole. For example, sole structure may comprise e.g. an outsole which overlaps onto the midsole. In other words, the sole structure may be an outsole that wraps onto a midsole. Sole structure may further comprise any part of a midsole and/or overlapping parts of the outsole onto the midsole, e.g. a separate sidewall layer of a midsole. A sidewall layer may be based on e.g. liquid TPU. This sidewall layer is advantageous for protecting e.g. lightweight foams used in trail and/or outdoor shoes.

A *"polymer"* according to present disclosure is but not limited to, a polymer s preferably made from durable and long-lasting materials. In particular, the polymer material will provide for the contacting zone, which is in contact with the ground during e.g. the course of a gait. Furthermore, the polymer layer provides flexibility, durability, cushioning, and support in the sole structure.

A polymer layer or parts thereof comprises any polymer film or parts thereof. For example, a polymer layer may be a thin layer of polymer. The polymer layer may have cutouts. In this regard, the parts of the polymer layer comprise the cutouts of the polymer layer. These cutouts from the polymer layer may be referred to as *"parts thereof".*

A *"base layer"* according to present disclosure is but not limited to, a foundational part of the sole structure and helps to maintain the structural integrity of the sole structure.

The base layer may be a mid-sole and/or a shoe upper and/or parts thereof. The base layer does not necessarily need to be part of the sports shoe, i.e. removed when further processing the sole structure. The base layer may be e.g. a midsole and include materials that absorb shock and reduce the impact on the joints. The base layer may be made from durable materials to withstand the wear and tear of regular use. The base layer may work in conjunction with other layers of the sole structure and the sports shoe. The *"liquified polymer"* is to be understood but not limited to, as the polymer having semi-solid or liquid physical properties. The liquified polymer comprises a polymer and a liquifying element, such as a solvent.

*"Curing"* according to present disclosure is to be understood but not limited to, as a chemical and/or physical process of hardening, setting and/or solidification of the polymer. Curing may be carried out using radiation.

*"Mixing"* according to present disclosure is to be understood but not limited to, as a process of combining to or more substances resulting in a mixture of the individual substances, preferably in a liquid form.

*"Arranging"* according to present disclosure is to be understood but not limited to, as a process of applying and/or depositing for example the liquified polymer onto the base layer.

For example, the liquid material may be applied to a base layer which may be a carrier layer. The carrier layer is then attached to e.g. the midsole. In some embodiments, the liquified polymer may be applied directly to the midsole. In this regard, partially curing the liquified polymer and texturing the partially cured polymer is performed.

In some embodiments, the liquified polymer may be applied to a base layer (such as a carrier layer). In this regard, disposing the cured polymer obtained in step c and/or the polymer layer or parts thereof obtained in step b in a mold structure comprising a textured sole imprint and/or heating the mold structure, preferably by applying steam into the mold structure, while pressing the cured polymer and/or the polymer layer or parts thereof against the textured sole imprint; heating the cured polymer and/or the polymer layer or parts thereof in order to melt at least partially the cured polymer and/or the polymer layer or parts thereof, and to substantially mold the textured sole imprint on the outer surface of the cured polymer and/or the polymer layer or parts thereof, and/or thereby obtaining the sole structure is performed.

In some embodiments, steps f) to step h):
f. disposing (160) the cured polymer (232) obtained in step c and/or the polymer layer or parts thereof obtained in step b in a mold structure (300) comprising a textured sole imprint (340);
g. heating (170) the mold structure (300), preferably by applying steam into the mold structure (300), while pressing the cured polymer (232) and/or the polymer layer or parts thereof against the textured sole imprint (340);
h. heating (180) the cured polymer (232) and/or the polymer layer or parts thereof in order to melt at least partially the cured polymer and/or the polymer layer or parts thereof , and to substantially mold the textured sole imprint (340) on the outer surface of the cured polymer (232) and/or the polymer layer or parts thereof ;
may be performed with a liquified polymer. In addition, or alternatively, steps f) to h):
f. disposing (160) the cured polymer (232) obtained in step c and/or the polymer layer or parts thereof obtained in step b in a mold structure (300) comprising a textured sole imprint (340);
g. heating (170) the mold structure (300), preferably by applying steam into the mold structure (300), while pressing the cured polymer (232) and/or the polymer layer or parts thereof against the textured sole imprint (340);
h. heating (180) the cured polymer (232) and/or the polymer layer or parts thereof in order to melt at least partially the cured polymer and/or the polymer layer or parts thereof , and to substantially mold the textured sole imprint (340) on the outer surface of the cured polymer (232) and/or the polymer layer or parts thereof ;
may also be performed using a polymer layer, preferably based on TPU. The polymer layer may be polymer film, e.g. a TPU film. For example, the polymer layer may be inserted into the mold structure.

The polymer layer or parts thereof may be arranged on a carrier layer. A carrier layer may comprise any structural and/or supporting layer. It is conceivable that the carrier layer is arranged for example in a multi-layered material system. The carrier layer provides stability and facilitates processing. In particular, the carrier layer acts as a substrate for additional processing steps, such as coatings, adhesives, or functional layers. A carrier layer may comprise a material selected from the group comprising: thermoplastic polyurethane (TPU), rubber, polyester, aramid fibers, carbon fibers, glass fibers, and ultra-high molecular weight polyethylene (e.g. Dyneema) and/or ethylene vinyl acetate (EVA).

The polymer layer or parts thereof may comprise one or more cutout(s). Cutouts of the polymer layer are for example intentionally designed openings, perforations, and/or recesses. In particular it is conceivable that the polymer layer comprises one or more cutout(s) in a pattern. Accordingly, the openings, perforations and/or recesses e.g. parts of the polymer layer may comprise a pattern. By using the one or more cutouts, the flexibility, traction, and cushioning characteristics of the sole structure is enhanced. Moreover, the one or more cutouts provide for considerable weight reduction of the sole structure.

In the step of texturing the partially cured polymer, a texturing element may be applied on the partially cured polymer, wherein the texturing element is preferably air-permeable.

The use of an air-impermeable texturing element ensures that the applied force is uniformly distributed across the entire surface, and not affected by pressure differentials caused by trapped air. This leads to a more even and uniform surface structure across the entire sole structure surface. Furthermore, an air-impermeable texturing element maintains constant pressure, ensuring that the texture is "locked in" as the material cures, i.e. hardens. In this manner, defects such as deformation, misalignment, or loss of texture precision are minimized. Another advantage of using an air-impermeable texturing element is, that in this manner solvent is allowed to leave the polymer through evaporation. Without wishing to be bound to any theory, the surface of the partially cured polymer will not fully cure if the texturing element is not air-permeable. In other words, drying and/or curing will take a considerably longer time. The texturing element may be a mold, stamp, embossing tools and/or textile, preferably a stamp and/or a textile.

The texturing element may be applied onto the partially cured polymer for at least 5 minutes. Preferably, the texturing element may be applied onto the partially cured polymer for at least 1 hour. More preferably, the texturing element may be applied onto the partially cured polymer for at least 6 hours. Even more preferably, the texturing element may be applied onto the partially cured polymer for at least 12 hours. Most preferred, the texturing element may be applied onto the partially cured polymer for at least 24 hours.

In this manner, the partially cured polymer is allowed to cure during the application of the texturing element. This one-step process provides for a time- and energy-efficient process of texturing.

The texturing element may be a textile. Textiles exhibit more complex, irregular patterns such as fibers, weaves, and meshes that are difficult to replicate with conventional molds. By using a textile in the method of the present invention, a more *"natural"* and biomimetic surface structure is obtained in the sole structure. These textures are, for example, ideal for sole structures with a soft, organic, or natural design.

The curing time in the step of partially curing the liquified polymer may be 10 to 60 min. Preferably, the curing time in the step of partially curing the liquified polymer may be 15 to 40 min. More preferably, the curing time in the step of partially curing the liquified polymer may be 20 to 35 min. Most preferred, the curing time in the step of partially curing the liquified polymer may be 30 min.

The sole structure may comprise a surface structure. In this manner, the sole structure provides for traction and grip when used by a wearer. Furthermore, the surface structure allows for a rough design, which may be desirable for the user.

The surface structure may be selected from the group comprising one or more of: rectangular, grid, lattice, line, spiral, honeycomb, dots, wave or any combination thereof. The sole structure can be individually designed and can provide a plurality of surface structures. It is conceivable that the sole structure may have more than one surface structure. Alternatively, or in addition, the surface structure may be an outlined and/or filled pattern.

These specific surface structures improve the traction of the sole structure, which helps the wearer to maintain a secure footing on a variety of surfaces. Due to this improved traction, the wearer experiences greater stability, which reduces the chances of slipping or losing balance. This is especially important in sports requiring sudden stops, lateral movements, and quick turns, such as e.g. running, football, basketball, and tennis. In particular, using the patterns of the present invention allows for faster turns, cuts, and lateral movements.

The sole structure may be an outsole of the sports shoe. In this manner, the outsole provides for improved traction and grip as well as a design such as individual surface structure. For example, the sole structure may be used to provide for a badge branding. In other words, the sole structure has the advantage of providing for an outsole that may be used for design purposes.

The liquified polymer may be arranged onto one or more sections of the sports shoe, including a toe section, a forefoot section, a heel section, a midsole section, a sidewall section and/or an upper section. The liquified polymer can be applied onto different sections while being individually textured in the subsequent steps. Moreover, the liquified polymer may be arranged onto a plurality of sections.

The liquified polymer may be arranged onto one or more predetermined portions of the sports shoe determined using a traction map. The liquified polymer may be arranged onto one or more predetermined portions of the sports shoe determined using an abrasion map. The liquified polymer may be arranged onto one or more predetermined portions of the sports shoe determined using a pressure map. This has the advantage that the sole structure can be individually adapted to specific needs of the user.

The liquified polymer may be arranged onto the base layer with a thickness of 1-10 mm. Preferably, the liquified polymer may be arranged onto the base layer with a thickness of 2 mm-4 mm. Most preferably, the liquified polymer may be arranged onto the base layer with a thickness of 3 mm.

The thickness of the sole structure may be 0.3 mm-0.7 mm. Preferably, the thickness of the sole structure may be 0.5 mm.

The arranging step may be carried out by at least one of the following methods: brushing, coating, dipping, painting, automated dispensing, automated printing, controlled dispensing. The arranging step may be carried out by screen printing.

The liquified polymer may be arranged onto the base layer by 3D printing. 3D printing comprises additive manufacturing methods, such as stereolithographic methods and laser sintering. With stereolithographic methods light causes chemical monomers and oligomers to cross-link together to form layer-wise polymers making up the 3D printed object. With laser sintering a laser causes powdered material to sinter due to heat. Aiming the laser at points in space defined by a 3D model, binding the material together creates a solid structure. Another example of an additive manufacturing method is fused deposition modeling is which the part is produced by extruding small beads or streams of material which harden immediately to form layers. If both the midsole and the upper are manufactured using a 3D printing process, the midsole and the upper may be manufactured in separate 3D printing processes and connected afterwards, e.g. by gluing, welding sewing, etc. Alternatively, the midsole and the upper may be manufactured together in a single manufacturing step.

The base layer may be a mid-sole. The base layer may be a shoe upper. The base layer may be parts thereof. Accordingly, the liquified polymer is arranged onto e.g. the mid-sole, thus forming an outsole. In this embodiment, the polymer material may be an Ethylene-vinyl acetate (EVA), a thermoplastic urethane (TPU) or a supercritical foam. Those materials provide good cushioning properties while being relatively lightweight.

The liquified polymer may be arranged in a first section of the sports shoe with a dynamic viscosity of 30000 to 50000 mPa·s; and in a second section of the sports shoe with a dynamic viscosity of 10000 to 30000 mPa·s.

Different viscosities may be obtained by varying the mixing ratio of the solvent and the polymer. In this manner, it is possible to deposit different viscous materials on the second component by using one operation step. The method allows for flexible adaptation of the operation step based on the needs of the product.

The contact angle θ between the liquified polymer and the base layer may be 30° to 110°. Preferably, the contact angle θ between the liquified polymer and the base layer may be 40° to 90°. More preferably, the contact angle θ between the liquified polymer and the base layer may be 50° to 70°.

The curing steps may be carried out using radiation. In this way, the liquified component which is deposited on the second component is cured on the second component while at the same time removing the solvent and drying the deposited liquified component.

The liquified polymer may comprise a polymer and a solvent. The polymer may be selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.

The inventors have found that the use of these polymer allows for a time efficient and sustainable process in the production of the component. Suitable polymer materials may be elastic foam materials, such as thermoplastic elastomers and/or elastomers. Preferred materials used in present disclosure are thermoplastic elastomers. More preferred materials used in present disclosure are urethane-based thermoplastic elastomers (TPU), polyester-based thermoplastic elastomers (TPE) and/or polyamide-based thermoplastic elastomers (TPA).

These polymers allow for enhanced traction while reducing the probability of slipping. Moreover, the use of these specific polymers has shown that a time efficient and sustainable process in the production of the sole structure is achieved while providing for a more durable and long-lasting sole structure. Suitable polymer materials may be elastic foam materials, such as thermoplastic elastomers and/or elastomers. Preferred materials used in present disclosure are thermoplastic elastomers.

The solvent may be a mixture selected from the group of solvent-borne and/or water-borne solvents, preferably from the group of solvent-borne solvents, more preferably from the group of (C₁-C₆) ethers, (C₁-C₁₀) esters, (C₁-C₈) ketones, (C₁-C₈) alkanes, and/or combinations thereof.

These solvents have shown the best compatibility with the production method of the component, while allowing for flexible adaptation of physical characteristics of the polymer to the requirements of the product and the process.

The solvent may be a mixture of one or more of tetrahydrofuran (THF), methyl ethyl ketone (MEK), cyclohexane (CYC), ethyl acetate, butyl acetate, preferably THF and/or CYC.

These solvents have the advantage that they can be removed in a time efficient manner during the curing process and allow for a production process that is capable of adapting to various physical properties of the liquid polymer.

The ratio of the mixture may be in the range of 10 to 90 vol. %. Preferably, the ratio of the mixture may be in the range of 20 to 80 vol. %. More preferably, the ratio of the mixture may be in the range of 30 to 70 vol. %.

In this manner, the ratio of the mixture of the solvent shows the best compatibility for both mixing the polymer and changing/adapting the physical characteristics of the liquified polymer to the special requirements of the product and the process.

The polymer may be characterized by a Shore A value. The polymer may be characterized by a Shore D value. The Shore A value may be in the range of 20 to 120. Preferably, the Shore A value may be in the range of 40 to 100. More preferably, the Shore A value may be in the range of 60 to 80. The Shore D value may be in the range of 2 to 80. Preferably, the Shore D value may be in the range of 5 to 75. More preferably the Shore D value may be in the range of 8 to 70.

The use of a polymer comprising these Shore A and/or Shore D values provide for the durable properties of the polymer layer and the overall sole structure.

The ratio of the polymer to the solvent may be in the range of 2:98 to 40:60 vol.%. Preferably, the ratio of the polymer to the solvent may be in the range of 5:95 to 30:70 vol.%. More preferably, the ratio of the polymer to the solvent may be in the range of 10:90 to 20:80 vol.%.

Accordingly, the specific ratio of solvent to the polymer allows for convenient use in the deposition process and flexible adaptation to the requirements of the product and/or process.

The liquified polymer may comprise a dynamic viscosity of 10000 to 50000 mPa·s. Preferably, the liquified polymer may comprise a dynamic viscosity of 20000 to 40000 mPa·s. The use of the liquid polymer comprising the specific dynamic viscosity allows for its use in automated and/or manual deposition processes.

In the curing steps a curing temperature of between 20°C to 150°C. Preferably, in the curing steps a curing temperature of between 30°C to 100°C. More preferably, in the curing steps a curing temperature of between 40°C to 50°C may be used.

In the step of curing the liquified polymer the curing time may be between 2 min to 750 min. Preferably, in the step of curing the liquified polymer the curing time may be between 5 min to 390 min. More preferably, in the step of curing the liquified polymer the curing time may be between 10 min to 180 min.

These curing conditions allow for the cost- and energy-efficient process for the production of the sole structure.

In some embodiments, the outsole may be the sole structure according to the first aspect of the invention. In addition, or alternatively, the sole structure may be a sole. Using the inventive sole structure as an outsole and/or sole has shown to improve the traction of the sports shoe.

In a second aspect, the present invention relates to a sole structure manufactured according to the method of the present invention.

While the sole structure can be specifically used to create a lighter and thinner e.g. outsole, the sole structure can be further used to enhance the grip of the sports shoe for particular workouts, e.g. when arranging the liquified polymer in particular zones of the sports shoe.

The sole structure of the present invention enhances traction on smooth and wet surfaces while reducing the probability of slipping. When using the sole structure according to the invention, the running performance of the wearer, e.g. an athlete is substantially improved. Due to the reduced risk of slipping, e.g. on wet and smooth surfaces, the sole structure provides for an improved overall workout experience and result. In particular, and when comparing to conventional sole structures, the sole structure of the present invention exhibits a drastic improvement in friction. Moreover, the sole structure has the advantage that it can be individually designed based on the friction force, which acts on the sole structure. Furthermore, the sole structure is considerably lighter and thinner, due to the inventive materials and manufacturing method, making the overall sole structure more desirable.

In a third aspect, the present invention relates to an outsole manufactured according to the method of the present invention. The outsole may have a surface structure.

The outsole of the present invention is considerably thinner and lighter than sole structures known in the art. Moreover, the outsole can be individual designed and adapted to specific needs of the user The outsole may comprise one or more surface structures. It is conceivable, that the outsole comprises different surface structures, which aim to provide different functionalities to the outsole. However, it is also conceivable that the outsole comprises a plurality of surface structures, which are identical in terms of pattern, but differ in depth, thickness or the like.

In a fourth aspect, the present invention relates to a sports shoe comprising a sole structure of the present invention or an outsole according to the present invention.

The sports shoe comprising the outsole according to the present invention is considerably lighter, and thinner, making the overall sports shoe more desirable. In addition, the sports shoe exhibits the same and/or even enhanced durability and performance properties than sports shoes known in the art.

The many advantages discussed in the context of the first aspects of the present invention apply also to the further aspects of the present invention i.e. the advantages discussed for the method of the present invention apply to the sole structure, outsole and sports shoe of the present invention.

We emphasize that all aspects, features, and options discussed and disclosed above within the context of the first aspect may be applied to, or combined with, the discussion and disclosure of the second aspect, and *vice versa,* unless physically or technically ruled out, even if not every possible combination or sub-combination of features is explicitly spelled out in the following. The technical advantages of such options and features that have already been discussed above are therefore not repeated, at least not to the same degree of detail, and reference is instead made to the corresponding explanations above, for conciseness.

### SHORT DESCRIPTION OF THE FIGURES

Possible embodiments of the present invention are further described in the following detailed description with reference to the following figures:
- **Fig**. **1**:: shows a flow diagram of the method for manufacturing the sole structure.
- **Figs. 2 to 4:**: show preferred embodiments of sole structures manufactured using the method according to the invention.
- **Fig. 5:**: shows a preferred embodiment of an outsole comprising the sole structure according to the invention.
- **Fig. 6:**: illustrates the manufacturing process of the outsole shown in Fig. 5 comprising the sole structure according to the invention.

### DETAILED DESCRIPTION OF PREFERRED EMBODIMENTS

Possible embodiments of the different aspects of the present invention and disclosure are described below, predominately with respect to sport shoes. It is, however, once again emphasized that the different aspects may also be practiced in different kinds of soles and shoes and are not limited to the specific embodiments set forth below.

Reference is further made to the fact that in the following only individual embodiments can be described in more detail. The skilled person will understand that the features and possible modifications described with reference to these specific embodiments may also be further modified and/or combined with one another in a different manner or in different sub-combinations, without departing from the scope of the present invention and disclosure. Individual features or sub-features may also be omitted if they are dispensable to obtain the desired result. In order to avoid redundancies, reference is therefore made to the explanations in the preceding sections, which also apply to the following detailed description.

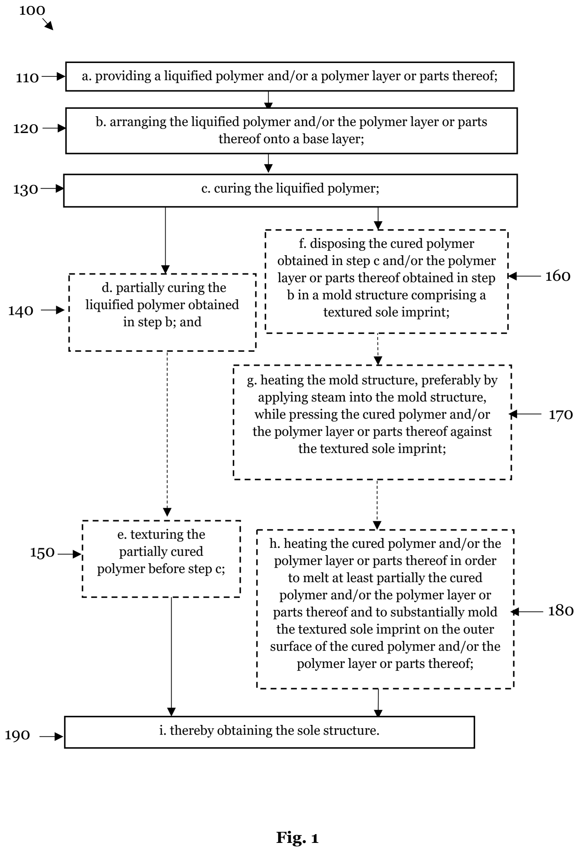

In **Fig. 1****,** a flowchart for the method 100 for manufacturing a sole structure 240, preferably for a sports shoe 260 is shown.

In step 110, the liquified polymer is provided. The liquified polymer comprises a polymer and a solvent. The ratio of the polymer to the solvent is in the range of 2:98 to 40:60 vol.%, preferably, 5:95 to 30:70 vol.%, more preferably, 10:90 to 20:80 vol.%.

The polymer is characterized by a Shore A value and/or Shore D value, wherein the Shore A value is in the range of 20 to 120, preferably, 40 to 100, more preferably, 60 to 80; and the Shore D value is in the range of 2 to 80, preferably 5 to 75, more preferably 8 to 70. Furthermore, the polymer is selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.

The solvent is a mixture selected from the group of solvent-borne and/or water-borne solvents, preferably from the group of solvent-borne solvents, more preferably from the group of (C1-C₆) ethers, (C1-C10) esters, (C1-C8) ketones, (C1-C8) alkanes, and/or combinations thereof. In particular, the solvent is a mixture of one or more of tetrahydrofuran (THF), methyl ethyl ketone (MEK), cyclohexane (CYC), ethyl acetate, butyl acetate, preferably THF and/or CYC. The ratio of this mixture may be in the range of 10 to 90 vol. %. Preferably the ratio is 20 to 80 vol. %, more preferably 30 to 70 vol. %.

The liquified polymer 230 comprises a dynamic viscosity of 10000 to 50000 mPa·s, preferably of 20000 to 40000 mPa·s. Furthermore, in step 120 the liquified polymer is arranged onto a base layer. The base layer is preferably a midsole, but can also be a layer, which is not part of the sports shoe. In other words, the base layer may be any layer for arranging the liquified polymer.

In step 110, it is conceivable, a polymer layer and parts thereof are provided. In this regard, the polymer layer and parts thereof comprise cutouts. In particular, these cutouts comprise a pattern. For example, the polymer layer comprises cutouts in a square-shaped and/or rectangular pattern. Any pattern may be conceivable in this regard. In this context, the polymer layer or parts thereof are arranged on a base layer. The base layer is preferably a midsole, but can also be a layer, which is not part of the sports shoe. In other words, the base layer may be any layer for arranging the liquified polymer.

The liquified polymer 230 may be arranged onto the base layer with a thickness of 1-10 mm. Preferably the thickness is of 2 mm-4 mm, most preferred 3 mm. The base layer 250 may be a mid-sole and/or a shoe upper and/or parts thereof.

It is conceivable that the liquified polymer 230 may be arranged in a first section of the sports shoe 260 with a dynamic viscosity of 30000 to 50000 mPa·s and in a second section of the sports shoe 260 with a dynamic viscosity of 10000 to 30000 mPa·s. The contact angle θ between the liquified polymer 230 and the base layer 250 may be 30° to 110°, preferably 40° to 90°, more preferably 50° to 70°.

When arranging the liquified polymer in step 120, at least one of the following methods is applied: brushing, coating, dipping, painting, automated dispensing, automated printing, controlled dispensing.

The liquified polymer may be arranged onto one or more sections of the sports shoe 260. The sections may be a toe section, a forefoot section, a heel section, a midsole section, a sidewall section and/or an upper section. The liquified polymer 230 may be also arranged onto one or more predetermined portions of the sports shoe 260 determined using a traction map, an abrasion map and/or a pressure map. In this manner, the liquified polymer can be arranged based on individual needs and requirements of the wearer.

In step 120, the polymer layer and parts thereof are arranged on a carrier layer.

The method 100 as shown in **Fig. 1** comprises further the step of 130 of curing the arranged liquified polymer. Curing may be carried out using radiation. The curing temperature is of between 20°C to 150°C. Preferably, the curing temperature is of 30°C to 100°C, more preferably 40°C to 50°C. Furthermore, the curing time is between 2 min to 750 min, preferably, 5 min to 390 min, more preferably 10 min to 180 min.

According to one alternative, the arranged liquified polymer obtained in step 120 (step b) is partially cured in step 140 and textured 150 before step 130 (step c). The curing time is 10 to 60 min. This may be preferably 15 to 40 min, more preferably 20 to 35 min, most preferred 30 min.

Preferably, a texturing element is applied on the partially cured polymer. The texturing element is preferably air-permeable. In this manner, the partially cured polymer can cure while being textured by the texturing element.

In particular, the texturing element is applied onto the partially cured polymer for at least 5 minutes. Preferably, the application of the texturing element may be at least 1 hour, more preferably at least 6 hours, even more preferably at least 12 hours, most preferred at least 24 hours. In some embodiments, the texturing element is a textile. However, the texturing element may be also a stamp, an embossing element and/or a mold.

According to a second alternative, which may be performed in addition to the first alternative, the cured polymer of step 130 (step c) is disposed in a mold structure 160. The mold structure comprises a textured sole imprint 340. Afterwards, the mold structure is heated in step 170. This is preferably done by applying steam, e.g. in a steam chest mold. Meanwhile in step 170, the cured polymer is pressed against the textured sole imprint of the mold structure. In the subsequent step 180, the cured polymer is heated in order to melt at least partially the cured polymer. In this manner, the textured sole imprint is substantially mold on the outer surface of the cured polymer.

In particular, in the steps of 160 to 180, the base layer is dried for 2 hours, preferably 3 hours more preferably 4 hours. Preferably, drying is performed by at least 50°C, preferably 60°C, more preferably at least 70°C. Drying may be performed by using heat.

In this regard, steam chest molding may be preferred. The temperature may be of at least 130°C. Preferably, the temperature is at least 150°C. More preferably the temperature is at least 160°C. Steaming may be performed in at least 30 seconds, preferably 45 seconds, most preferred in under a minute. The steaming may be performed in at most 6 minutes, preferably in at most 5 minutes, most preferred at most 3 minutes.

The second alternative also applies to the polymer layer and/or parts thereof. In the second alternative, the polymer layer and/or parts thereof are disposed in a mold structure 160. The mold structure comprises a textured sole imprint 340. Afterwards, the mold structure is heated in step 170. This is preferably done by applying steam, e.g. in a steam chest mold. Meanwhile in step 170, the polymer layer and/or parts thereof are pressed against the textured sole imprint of the mold structure. In the subsequent step 180, the polymer layer and/or parts thereof are heated in order to melt at least partially the cured polymer. In this manner, the textured sole imprint is substantially mold on the outer surface of the cured polymer.

In particular, in the steps of 160 to 180, the base layer is dried for 2 hours, preferably 3 hours more preferably 4 hours. Preferably, drying is performed by at least 50°C, preferably 60°C, more preferably at least 70°C. Drying may be performed by using heat.

However, it is conceivable that the polymer layer and/or parts thereof are textured in step 150 of method 100.

After the first and/or the second alternative as shown in **Fig. 1****,** the sole structure 240 is obtained in step 190. The thickness of the sole structure 240 may be 0.3 mm-0.7 mm, preferably 0.5 mm. Furthermore, the sole structure 240 may comprise a surface structure 400. This surface structure may be selected from the group comprising one or more of: rectangular, grid, lattice, line, spiral, honeycomb, dots, wave or any combination thereof.

In one embodiment, the sole structure 240 is an outsole 290 of the sports shoe 260. In another embodiment, an outsole 290 is manufactured according to the method 100 shown in **Fig. 1****,** which has a surface structure 400. In another embodiment, a sports shoe 260 comprises a sole structure or an outsole of the present invention.

The textured cured polymer may have a length of at least 0.5 cm, preferably 1 cm, more preferably 1.5 cm, most preferred 2 cm and/or width of at least 0.7 cm, preferably 1.5 cm, more preferably 2.3 cm, most preferred 3 cm.

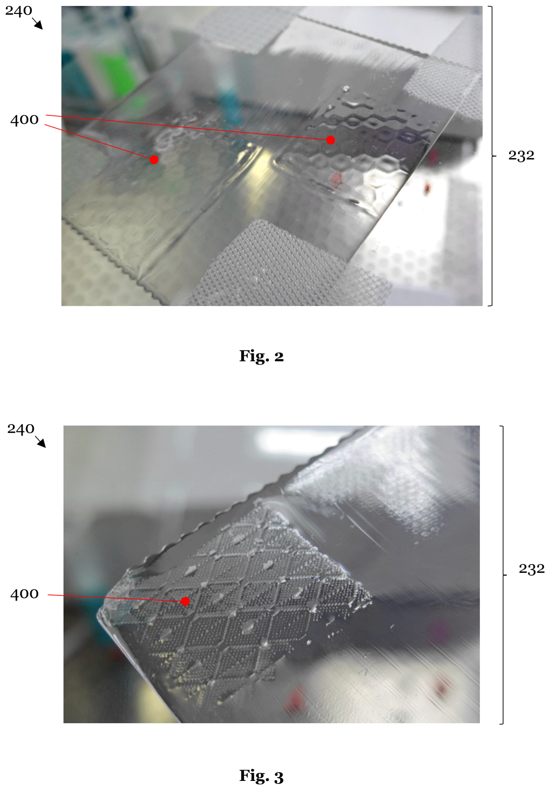

In order to avoid unnecessary redundancy, only differences or additions to the method described in Fig. 1 will be discussed with respect to the different embodiments shown in Figs. 2 to 6.

**Fig. 2** shows a preferred embodiment of the sole structure 240 manufactured according to the method of the invention (described in the context of Fig. 1 above). The sole structure 240 has a rough texture and a matte design.

In particular, the sole structure 240 shown in Fig. 2 is obtained by partially curing the liquified polymer after step d. and texturing the partially cured polymer using a textile. The partially cured polymer has been cured for 10 to 60 minutes. Preferably the partially cured polymer has been cured for 15 to 40 minutes, more preferably for 20 to 30 minutes.

However, the sole structure 240 shown in Fig. 2 may be obtained by disposing a polymer layer in a mold structure comprising a textured sole imprint, heating the mold structure by applying steam into the mold structure, while pressing the polymer layer against the textured sole imprint and heating the polymer layer in order to melt at least partially the polymer layer, and to substantially mold the textured sole imprint on the outer surface of the polymer layer.

The pattern 400 is obtained by texturing the partially cured polymer. In particular, a textile is permeable, e.g. comprises a permeable lattice structure has been applied to the partially cured polymer. Permeable lattices for embossing are structures that allow the passage of air, heat, or material while simultaneously applying a pattern to a surface. For example, perforated or mesh-like surfaces are used that that allow air evacuation while pressing a pattern onto a material e.g., made from rubber, silicone, polyester, or nylon.

As can be seen in **Fig. 2****,** the pattern 400 is a honeycomb shaped-pattern. Specifically, the honeycomb-shaped pattern comprises a plurality of hexagonal shaped elements. It is conceivable, that the pattern 400 is a grid, lattice, line, spiral, honeycomb, dots, wave, sine wave pattern or any combination thereof. The pattern 400 which is obtained in this manner is shallow.

In some embodiments, force has been applied to the textile when applying to the partially cured polymer. Preferably, a force of between 5.000 to 15.000 kN has been applied during the step of texturing. In this manner, it is ensured that the texture is applied to the partially cured polymer. Alternatively, a force of between 1 to 1.000 N, preferably of between 5 to 500 N, more preferably of between 10 to 100 N, even more preferably of approximately 50 N has been applied during the step of texturing. Since the partially cured polymer may still be quite soft during the step of texturing, such forces may be sufficient to achieve the desired texture.

During the texturing time of 5 minutes, preferably at least 1 hour, more preferably at least 6 hours, even more preferably at least 12 hours, most preferred at least 24 hours. Afterwards, the textured polymer is cured 232, thereby proving for the sole structure 240. In this manner, the partially cured and textured polymer is cured completely.

**Fig. 3** shows a preferred embodiment of the sole structure 240 manufactured according to the method of the invention (described in the context of Fig. 1 above). The sole structure 240 has a rough texture and a matte design.

In particular, the pattern 400 is obtained by partially curing the liquified polymer and texturing the partially cured polymer using a textile. In this manner, the textile provides for a pattern 400 which is shallow.

The textile used for texturing the partially cured polymer is permeable, e.g. comprises a permeable lattice structure. As can be seen in **Fig. 3****,** the pattern 400 is a grid-like pattern. Specifically, the grid-like pattern comprises two rectangular-shaped elements which are arranged in a repetitive manner. It is conceivable, that the pattern 400 is a grid, lattice, line, spiral, honeycomb, dots, wave, sine wave pattern or any combination thereof.

In some embodiments, force has been applied to the textile when applying to the partially cured polymer during the step of texturing. Preferably, a force of 5.000 to 15.000 kN has been applied during the step of texturing. In this manner, it is ensured that the pattern is applied to the partially cured polymer.

During the texturing time of 5 minutes, preferably at least 1 hour, more preferably at least 6 hours, even more preferably at least 12 hours, most preferred at least 24 hours. Afterwards, the textured polymer is cured 232, thereby proving for the sole structure 240. In this manner, the partially cured and textured polymer is cured completely.

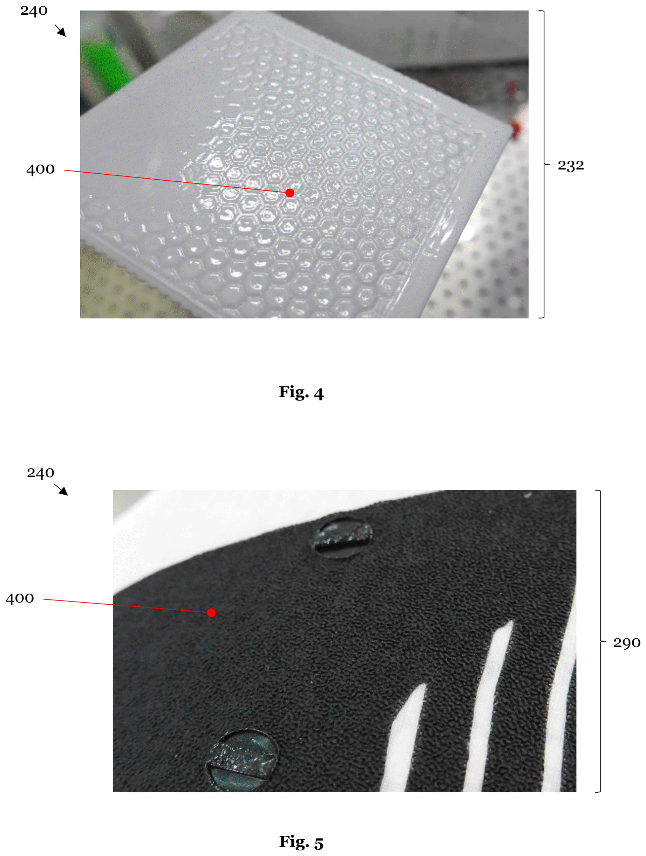

**Fig. 4** shows a preferred embodiment of the sole structure 204 manufactured according to the method of the invention (described in the context of Fig. 1 above). The sole structure 240 has a rough texture and a matte design.

In particular, the pattern 400 is obtained by partially curing the liquified polymer and texturing the partially cured polymer using a stamp. In this manner, the textile provides for a pattern 400 which is shallow.

As can be seen in **Fig. 4****,** the pattern 400 is a honeycomb shaped pattern. Specifically, the honeycomb-shaped pattern comprises a plurality of hexagonal shaped elements. It is conceivable, that the pattern 400 is a grid, lattice, line, spiral, honeycomb, dots, wave, sine wave pattern or any combination thereof. The pattern 400 which is obtained in this manner is shallow.

In some embodiments, force has been applied to the stamp when applying to the partially cured polymer. Preferably, a force of 5.000 to 15.000 kN has been applied during the step of texturing. In this manner, it is ensured that the texture is applied to the partially cured polymer. It is conceivable that the applied force may be less depending on the materials used.

The stamp may be a roller or a plate with engraved or etched designs that are pressed into the sole structure material. It is conceivable that heat may be used during the process of texturing.

**Fig. 5** shows a preferred embodiment of an outsole 290 comprising the sole structure 240. The sole structure 240 is manufactured according to the method of the present invention. The sole structure 240 has a rough texture and a matte finish.

In particular, the pattern 400 is obtained by disposing the cured polymer in a mold structure with a sole imprint. Specifically, the mold structure is heated by applying steam into the mold structure, while pressing the cured polymer indirectly against the sole imprint. Afterwards, the cured polymer is heated in order to melt at least partially the cured polymer and substantially mold the sole imprint on the outer face of the cured polymer.

However, the pattern 400 shown in Fig. 5 may be obtained by disposing a polymer layer in a mold structure comprising a textured sole imprint, heating the mold structure by applying steam into the mold structure, while pressing the polymer layer against the textured sole imprint and heating the polymer layer in order to melt at least partially the polymer layer, and to substantially mold the textured sole imprint on the outer surface of the polymer layer.

The outsole 290 shown in Fig. 5 may be obtained in a similar manner, by using a heat press. In particular the pattern 400 is obtained by disposing the cured polymer in a mold structure with a sole imprint wherein the mold structure is heated while pressing the cured polymer against the sole imprint. As can be seen in **Fig. 5****,** the outsole 290 has a pattern 400 which comprises a moss-like structure.

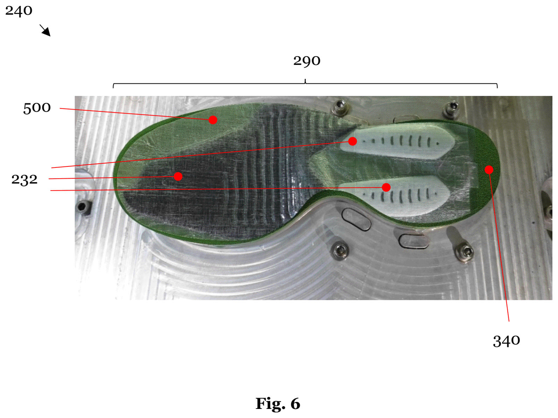

**Fig. 6** illustrates the process of manufacturing the outsole of Fig. 5. As can be seen in Fig. 6, the outsole 290 is made from the cured polymer 232. In particular, a fiber material 500 is layered in between the cured polymer and the sole imprint, e.g. an ultra-high-molecular-weight polyethylene (UHMWPE) fiber such as Dyneema. Other fiber materials may be used, such as (para-)aramid, polybenzoxazole, liquid crystal polymer, meta-aramid, or any combination thereof. However, it is conceivable that the cured polymer is directly pressed against the sole imprint.

It is conceivable, that the pattern 400 is a grid, lattice, line, spiral, honeycomb, dots, wave, sine wave pattern or any combination thereof. The cured polymer 232 is placed in between the fiber material 500 (shown as transparent sheet) and the mold structure comprising a sole imprint 340.

It is noted that the above embodiments and / or examples may be combined with further aspects as described herein and details of the embodiments and / or examples may also be omitted, as will be understood by the skilled person. The scope of protection is determined by the claims and is not limited by the embodiments and / or examples disclosed in the above figures.

In the following, further embodiments are described to facilitate understanding of the invention:
1. Method (100) for manufacturing a sole structure (240), preferably for a sports shoe (260), comprising the steps of:
   a. providing (110) a liquified polymer (230) and/or a polymer layer or parts thereof;
   b. arranging (120) the liquified polymer and/or the polymer layer or parts thereof onto a base layer (250); and
   c. curing (130) the liquified polymer;

   wherein the method comprises a first group of steps and/or a second group of steps, wherein the first group of steps comprises:
      d. partially curing (140) the liquified polymer (230) obtained in step b; and
      e. texturing (150) the partially cured polymer (231) before step c;
   wherein the second group of steps comprises:
      f. disposing (160) the cured polymer (232) obtained in step c and/or the polymer layer or parts thereof obtained in step b in a mold structure (300) comprising a textured sole imprint (340);
      g. heating (170) the mold structure (300), preferably by applying steam into the mold structure (300), while pressing the cured polymer (232) and/or the polymer layer or parts thereof against the textured sole imprint (340);
      h. heating (180) the cured polymer (232) and/or the polymer layer or parts thereof in order to melt at least partially the cured polymer and/or the polymer layer or parts thereof , and to substantially mold the textured sole imprint (340) on the outer surface of the cured polymer (232) and/or the polymer layer or parts thereof ;
      i. thereby obtaining (190) the sole structure (240).
2. Method according to embodiment 1, wherein the polymer layer or parts thereof is arranged on a carrier layer.
3. Method according to one of embodiments 1 or 2, wherein the polymer layer or parts thereof comprise(s) one or more cutout(s).
4. Method according to one of the preceding embodiments, wherein in the step of texturing (150) the partially cured polymer, a texturing element is applied on the partially cured polymer, wherein the texturing element is preferably air-permeable.
5. Method according to embodiment 4, wherein the texturing element is applied onto the partially cured polymer for at least 5 minutes, preferably at least 1 hour, more preferably at least 6 hours, even more preferably at least 12 hours, most preferred at least 24 hours.
6. Method (100) according to one of the preceding embodiments, wherein the texturing element is a textile.
7. Method (100) according to one of the preceding embodiments, wherein the curing time in the step of partially curing (140) the liquified polymer (230) is 10 to 60 min, preferably 15 to 40 min, more preferably 20 to 35 min, most preferred 30 min.
8. Method (100) according to one of the preceding embodiments, wherein the sole structure (240) comprises a surface structure (400).
9. Method (100) according to the preceding embodiment, wherein the surface structure (400) is selected form the group comprising one or more of: rectangular, grid, lattice, line, spiral, honeycomb, dots, wave or any combination thereof.
10. Method (100) according to one of the preceding embodiments, wherein the sole structure (240) is an outsole (290) of the sports shoe (260).
11. Method (100) according to one of the preceding embodiments, wherein the liquified polymer (230) and/or the polymer layer or parts thereof is arranged onto one or more sections of the sports shoe (260), including a toe section, a forefoot section, a heel section, a midsole section, a sidewall section and/or an upper section.
12. Method (100) according to one of the preceding embodiments, wherein the liquified polymer (230) and/or the polymer layer or parts thereof is arranged onto one or more predetermined portions of the sports shoe (260) determined using a traction map, an abrasion map and/or a pressure map.
13. Method (100) according to one of the preceding embodiments, wherein the liquified polymer (230) and/or the polymer layer or parts thereof is arranged onto the base layer with a thickness of 1-10 mm, preferably 2 mm-4 mm, most preferably 3 mm.
14. Method (100) according to one of the preceding embodiments, wherein the thickness of the sole structure (240) is 0.3 mm-0.7 mm, preferably 0.5 mm.
15. Method (100) according to one of the preceding embodiments, wherein the arranging step (120) is carried out by at least one of the following methods: brushing, coating, dipping, painting, automated dispensing, automated printing, controlled dispensing.
16. Method (100) according to one of the preceding embodiments, wherein the base layer (250) is a mid-sole and/or a shoe upper and/or parts thereof.
17. Method (100) according to one of the preceding embodiments, wherein the liquified polymer (230) is arranged in a first section of the sports shoe (260) with a dynamic viscosity of 30000 to 50000 mPa·s; and in a second section of the sports shoe (260) with a dynamic viscosity of 10000 to 30000 mPa·s.
18. Method (100) according to one of the preceding embodiments, wherein the contact angle θ between the liquified polymer (230) and the base layer (250) is 30° to 110°, preferably 40° to 90°, more preferably 50° to 70°.
19. Method (100) according to one of the preceding embodiments, wherein the curing steps (130, 140) are carried out using radiation.
20. Method (100) according to one of the preceding embodiments, wherein the liquified polymer comprises a polymer and a solvent; wherein the polymer is selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.
21. Method (100) according to embodiment 18, wherein the solvent is a mixture selected from the group of solvent-borne and/or water-borne solvents, preferably from the group of solvent-borne solvents, more preferably from the group of (C₁-C₆) ethers, (C₁-C₁₀) esters, (C₁-C₈) ketones, (C₁-C₈) alkanes, and/or combinations thereof.
22. Method (100) according to one of embodiments 18 or 19, wherein the solvent is a mixture of one or more of tetrahydrofuran (THF), methyl ethyl ketone (MEK), cyclohexane (CYC), ethyl acetate, butyl acetate, preferably THF and/or CYC.
23. Method (100) according to one of embodiments 18 to 20, wherein the ratio of the mixture is in the range of 10 to 90 vol. %., preferably 20 to 80 vol. %, more preferably 30 to 70 vol. %.
24. Method (100) according to embodiment 18, wherein the polymer is characterized by a Shore A value and/or Shore D value, wherein the Shore A value is in the range of 20 to 120, preferably, 40 to 100, more preferably, 60 to 80; and the Shore D value is in the range of 2 to 80, preferably 5 to 75, more preferably 8 to 70.
25. Method (100) according to one of embodiments 18 to 22, wherein the ratio of the polymer to the solvent is in the range of 2:98 to 40:60 vol.%, preferably, 5:95 to 30:70 vol.%, more preferably, 10:90 to 20:80 vol.%.
26. Method (100) according to one of the preceding embodiments, wherein the liquified polymer (230) comprises a dynamic viscosity of 10000 to 50000 mPa·s, preferably of 20000 to 40000 mPa·s.
27. Method (100) according to one of the preceding embodiments, wherein in the curing steps (130, 140) a curing temperature of between 20°C to 150°C, preferably 30°C to 100°C, more preferably 40°C to 50°C is used; and wherein in the step of curing the liquified polymer (130) the curing time is between 2 min to 750 min, preferably, 5 min to 390 min, more preferably 10 min to 180 min.
28. Sole structure (240) manufactured according to the method (100) of one of embodiments 1 to 27.
29. Outsole (290) manufactured according to the method (100) of one of embodiments 1 to 27.
30. Outsole (290) according to the preceding embodiment, wherein the outsole has a surface structure (400).
31. Sports shoe (260) comprising a sole structure of embodiment 28 or an outsole according to one of embodiments 29 to 30.

## Claims

1. Method (100) for manufacturing a sole structure (240), preferably for a sports shoe (260), comprising the steps of:
providing (110) a liquified polymer (230) and/or a polymer layer or parts thereof;
arranging (120) the liquified polymer and/or the polymer layer or parts thereof onto a base layer (250); and
curing (130) the liquified polymer;
wherein the method comprises a first group of steps and/or a second group of steps, wherein the first group of steps comprises:
partially curing (140) the liquified polymer (230) obtained in step b; and
texturing (150) the partially cured polymer (231) before step c;
wherein the second group of steps comprises:
disposing (160) the cured polymer (232) obtained in step c and/or the polymer layer or parts thereof obtained in step b in a mold structure (300) comprising a textured sole imprint (340);
heating (170) the mold structure (300), preferably by applying steam into the mold structure (300), while pressing the cured polymer (232) and/or the polymer layer or parts thereof against the textured sole imprint (340); heating (180) the cured polymer (232) and/or the polymer layer or parts thereof in order to melt at least partially the cured polymer and/or the polymer layer or parts thereof, and to substantially mold the textured sole imprint (340) on the outer surface of the cured polymer (232) and/or the polymer layer or parts thereof;
thereby obtaining (190) the sole structure (240).

2. Method according to claim 1, wherein the polymer layer or parts thereof is arranged on a carrier layer; and/or
wherein the polymer layer or parts thereof comprise(s) one or more cutout(s); and/or
wherein in the step of texturing (150) the partially cured polymer, a texturing element is applied on the partially cured polymer, wherein the texturing element is preferably air-permeable; preferably
wherein the texturing element is applied onto the partially cured polymer for at least 5 minutes, preferably at least 1 hour, more preferably at least 6 hours, even more preferably at least 12 hours, most preferred at least 24 hours.

3. Method (100) according to one of the preceding claims, wherein the texturing element is a textile; and/or
wherein the curing time in the step of partially curing (140) the liquified polymer (230) is 10 to 60 min, preferably 15 to 40 min, more preferably 20 to 35 min, most preferred 30 min; and/or
wherein the sole structure (240) comprises a surface structure (400); and/or wherein the surface structure (400) is selected form the group comprising one or more of: rectangular, grid, lattice, line, spiral, honeycomb, dots, wave or any combination thereof; and/or
wherein the sole structure (240) is an outsole (290) of the sports shoe (260); and/or
wherein the liquified polymer (230) and/or the polymer layer or parts thereof is arranged onto one or more sections of the sports shoe (260), including a toe section, a forefoot section, a heel section, a midsole section, a sidewall section and/or an upper section; and/or
wherein the liquified polymer (230) and/or the polymer layer or parts thereof is arranged onto one or more predetermined portions of the sports shoe (260) determined using a traction map, an abrasion map and/or a pressure map; and/or wherein the liquified polymer (230) and/or the polymer layer or parts thereof is arranged onto the base layer with a thickness of 1-10 mm, preferably 2 mm-4 mm, most preferably 3 mm.

4. Method (100) according to one of the preceding claims, wherein the thickness of the sole structure (240) is 0.3 mm-0.7 mm, preferably 0.5 mm; and/or wherein the arranging step (120) is carried out by at least one of the following methods: brushing, coating, dipping, painting, automated dispensing, automated printing, controlled dispensing; and/or
wherein the base layer (250) is a mid-sole and/or a shoe upper and/or parts thereof; and/or
wherein the liquified polymer (230) is arranged in a first section of the sports shoe (260) with a dynamic viscosity of 30000 to 50000 mPa·s; and in a second section of the sports shoe (260) with a dynamic viscosity of 10000 to 30000 mPa·s.

5. Method (100) according to one of the preceding claims, wherein the contact angle θ between the liquified polymer (230) and the base layer (250) is 30° to 110°, preferably 40° to 90°, more preferably 50° to 70°.

6. Method (100) according to one of the preceding claims,
wherein the curing steps (130, 140) are carried out using radiation; and/or wherein the liquified polymer comprises a polymer and a solvent; wherein the polymer is selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.

7. Method (100) according to claim 5, wherein the solvent is a mixture selected from the group of solvent-borne and/or water-borne solvents, preferably from the group of solvent-borne solvents, more preferably from the group of (C₁-C₆) ethers, (C₁-C₁₀) esters, (C₁-C₈) ketones, (C₁-C₈) alkanes, and/or combinations thereof.

8. Method (100) according to one of claims 5 or 6, wherein the solvent is a mixture of one or more of tetrahydrofuran (THF), methyl ethyl ketone (MEK), cyclohexane (CYC), ethyl acetate, butyl acetate, preferably THF and/or CYC; and/or wherein the ratio of the mixture is in the range of 10 to 90 vol. %., preferably 20 to 80 vol. %, more preferably 30 to 70 vol. %.

9. Method (100) according to claim 5, wherein the polymer is **characterized by** a Shore A value and/or Shore D value, wherein the Shore A value is in the range of 20 to 120, preferably, 40 to 100, more preferably, 60 to 80; and the Shore D value is in the range of 2 to 80, preferably 5 to 75, more preferably 8 to 70.

10. Method (100) according to one of claims 5 to 8, wherein the ratio of the polymer to the solvent is in the range of 2:98 to 40:60 vol.%, preferably, 5:95 to 30:70 vol.%, more preferably, 10:90 to 20:80 vol.%.

11. Method (100) according to one of the preceding claims, wherein the liquified polymer (230) comprises a dynamic viscosity of 10000 to 50000 mPa·s, preferably of 20000 to 40000 mPa·s; and/or
wherein in the curing steps (130, 140) a curing temperature of between 20°C to 150°C, preferably 30°C to 100°C, more preferably 40°C to 50°C is used; and wherein in the step of curing the liquified polymer (130) the curing time is between 2 min to 750 min, preferably, 5 min to 390 min, more preferably 10 min to 180 min.

12. Sole structure (240) manufactured according to the method (100) of one of claims 1 to 11.

13. Outsole (290) manufactured according to the method (100) of one of claims 1 to 11.

14. Outsole (290) according to the preceding claim, wherein the outsole has a surface structure (400).

15. Sports shoe (260) comprising a sole structure of claim 12 or an outsole according to one of claims 13 to 14.
